# EUROPÄISCHE PATENTANMELDUNG

(11) **EP 4 716 089 A1**
(43) Veröffentlichungstag der Anmeldung: **25.03.2026**
(21) Anmeldenummer: 24202110.3
(22) Anmeldetag: 24.09.2024
(51) Int. Cl.: H02P 1/46, H02P 6/22, E05F 15/00, H02P 6/182

(54) **VERFAHREN ZUM ERKENNEN EINER BEWEGUNG EINER KLAPPE EINES KRAFTFAHRZEUGS**

(71) Anmelder: Magna Auteca GmbH, 8160 Krottendorf bei Weiz (AT)
(72) Erfinder: LAMPRECHT, Bernhard, 9064 Magdalensberg (AT)
(74) Vertreter: Zangger, Bernd

(57) **Zusammenfassung**

Ein Verfahren zum Erkennen einer Bewegung eines schwenkbaren Karosserieteils, insbesondere einer Klappe, eines Kraftfahrzeugs, wobei das Kraftfahrzeug einen Elektromotor mit einem Stator und einem Rotor umfasst, wobei der Elektromotor dazu eingerichtet ist, das schwenkbare Karosserieteil elektrisch zu öffnen bzw. schließen, wobei der Elektromotor ein BLDC Motor mit einem dreiphasigen Stator (A, B, C) ist, wobei zwei Phasen des Stators (A, B) mit einer pulsweitenmodulierten Spannung beaufschlagt werden, wobei die dritte Phase (C) freischwebend gehalten wird, wobei die dritte Phase (C) als Messpunkt für einen induktiven Spannungsteiler, der mit den zwei anderen Phasen (A, B) gebildet wird, überwacht wird, wobei wenn das Signal am Messpunkt oder eine von dem Signal abgeleitete Grüße einen vorgegebenen Schwellwert überschreitet, eine Öffnungs- bzw. Schließbewegung des schwenkbaren Karosserieteils erkannt ist und ein Kraftfahrzeug, wobei ein Steuergerät des Kraftfahrzeugs dazu eingerichtet ist, ein solches Verfahren auszuführen.

## Beschreibung

### Gebiet der Erfindung

Die vorliegende Erfindung betrifft ein Verfahren zum Erkennen einer Bewegung eines schwenkbaren Karosserieteils, insbesondere einer Klappe, eines Kraftfahrzeugs und ein Kraftfahrzeug, wobei ein Steuergerät des Kraftfahrzeugs dazu eingerichtet ist, ein solches Verfahren auszuführen, um eine Bewegung eines schwenkbaren Karosserieteils des Kraftfahrzeugs zu erkennen.

### Stand der Technik

Es ist bekannt, dass Kraftfahrzeuge schwenkbare Karosserieteile umfassen, wie beispielsweise Türen, Heckklappen, Tankklappen etc. Derartige Klappen können heutzutage manchmal elektrisch, durch die Antriebskraft eines Elektromotors, geschlossen und/oder geöffnet werden.

Um den Benutzerwunsch zum Öffnen oder Schließen einer elektrisch betätigten Klappe zu erkennen, werden häufig Sensoren oder Schalter verwendet, die nach Betätigung den elektrischen Öffnungs- bzw. Schließvorgang einleiten. Oftmals ist aber auch ein Öffnen bzw. Schließen nach kurzer manueller Bewegung (sogenanntes "tip to run") erwünscht: der Benutzer beginnt den Öffnungs- bzw. Schließvorgang per Hand und in weiterer Folge wird der elektrische Mechanismus (Elektromotor, Getriebe) aktiviert und vollendet den Öffnungs- bzw. Schließvorgang. Bekannt ist ein solches Verhalten von CD Laufwerken, zum Beispiel aus der US8799934B2. Die EP3554875B1 offenbart beispielsweise, dass eine rückinduzierte Spannung gemessen werden kann, um einen Schließvorgang zu initiieren.

Die Verwendung von externen Sensoren oder Schaltern erhöht die Anzahl der Bauteile im System und damit die Kosten des Kraftfahrzeugs. Die Messung der rückinduzierten Spannung ist geschwindigkeitsabhängig. Je nach Getriebeübersetzung zwischen dem zu bewegenden Bauteil und dem Elektromotor, erzeugen sehr langsame Bewegungen eine zu geringe rückinduzierte Spannung und die manuelle Betätigung wird nicht erkannt.

### Zusammenfassung der Erfindung

Es ist eine Aufgabe der Erfindung, ein Verfahren zum Erkennen einer Bewegung eines schwenkbaren Karosserieteils anzugeben, dass zuverlässig einen Öffnungs- und/oder Schließvorgang erkennen kann und dabei kostengünstig implementierbar ist, sowie ein Kraftfahrzeug anzugeben, dass ein derartiges zuverlässiges und kostengünstiges Verfahren zur Erkennung einer Öffnungs- und/oder Schließbewegung ausführen kann.

Die Lösung der Aufgabe erfolgt durch ein Verfahren zum Erkennen einer Bewegung eines schwenkbaren Karosserieteils, insbesondere einer Klappe, eines Kraftfahrzeugs, wobei das Kraftfahrzeug einen Elektromotor mit einem Stator und einem Rotor umfasst, wobei der Elektromotor dazu eingerichtet ist, das schwenkbare Karosserieteil elektrisch zu öffnen und/oder zu schließen,
wobei der Elektromotor ein BLDC Motor mit einem dreiphasigen Stator ist, wobei zwei Phasen des Stators mit einer pulsweitenmodulierten Spannung beaufschlagt werden, wobei die dritte Phase freischwebend gehalten wird, wobei die dritte Phase als Messpunkt für einen induktiven Spannungsteiler, der mit den zwei anderen Phasen gebildet wird, überwacht wird, wobei
wenn das Signal am Messpunkt oder eine von dem Signal abgeleitete Größe einen vorgegebenen Schwellwert überschreitet, eine Bewegung, insbesondere eine Öffnungs- oder Schließbewegung, des schwenkbaren Karosserieteils erkannt ist.

Erfindungsgemäß wird ein BLDC Motor mit einem dreiphasigen Stator verwendet, um einen Öffnungs- und/oder Schließvorgang einer Klappe zu überwachen, die üblicherweise über ein Getriebe mit dem Rotor des BLDC Motors verbunden ist.

Durch die Verwendung eines dreiphasigen BLDC Motors und einer geeigneten Spulenbestromung ist es möglich, Änderungen der Rotorposition zuverlässig festzustellen. Diese Änderungen in der Rotorposition können quantifiziert, mit einem Schwellwert verglichen und als Wunsch zum Öffnen oder zum Schließen der Klappe, des Griffs, der Tür etc. interpretiert werden.

Das Erkennen einer manuellen Bauteilbewegung erfolgt dabei über eine Bewegung des Rotors und die Einleitung einer elektrischen Bewegung des schwenkbaren Karosseriebauteils ist daraufhin möglich.

Durch Verwendung von Bauteilen, die für die elektrische Betätigung der Klappe ohnehin notwendig sind, können zusätzliche Bauteile und damit Kosten eingespart werden. Die Erkennung der manuellen Bewegung ist dabei geschwindigkeitsunabhängig, vor allem auch im Gegensatz zur Messung einer rückinduzierten Spannung.

Eine externe manuelle Bewegung an einer Klappe, beispielsweise einer Tür, bewirkt über ein nicht-selbsthemmendes Getriebe eine Winkeländerung des Rotors innerhalb des Antriebs. Der Stator des Motors ist dreiphasig ausgeführt, wobei die einzelnen Phasen im Stern verschalten sind. Wenn der Motor im Stillstand ist, werden zwei Phasen mit einer Pulsweiten-modulierten Spannung mit jeweils unterschiedlicher Pulsweite beaufschlagt und die dritte Phase wird vom Potential her freischwebend gehalten (sog. "tri-state"). Diese dritte Phase bildet nun einen Messpunkt für einen induktiven Spannungsteiler, der mit den zwei anderen Phasen gebildet wird. Wenn sich die Lage der magnetischen Pole des Rotors zu den Polen des Stators ändert, verändern sich die Induktivitäten des Spannungsteilers und diese Änderung ist an der freischwebenden Phase messbar. Es kann somit eine Drehung des Rotors und, durch Zählen der periodischen Schwankungen, auch der Winkel der Drehung bestimmt werden. Mit einer entsprechenden Logik kann das erhaltene Ergebnis dann als Wunsch des Bedieners interpretiert werden, die Klappe, die Tür etc zu öffnen bzw. zu schließen. Der Antrieb kann daraufhin eine elektrische Verstellung des schwenkbaren Bauteils einleiten.

Weiterbildungen der Erfindung sind in den abhängigen Ansprüchen, der Beschreibung sowie den beigefügten Zeichnungen angegeben.

Vorzugsweise wird das am Messpunkt gemessene Signal, bevorzugt die Sternpunktspannung, kontinuierlich überwacht. Dabei werden vorzugsweise periodische Schwankungen des Signals am Messpunkt gezählt, um einen Winkel der Drehung des Rotors zu bestimmen.

Bevorzugt wird das am Messpunkt gemessene Signal kontinuierlich überwacht, wobei abhängig von einem Typ von Schwankungen des Signals am Messpunkt, die Drehrichtung des Rotors bestimmt wird. Insbesondere kann die Drehrichtung des Rotors abhängig davon bestimmt werden, in welche Richtung die Sternpunktspannung relativ zur Sternpunktspannung in der Mittelposition des Rotors zu Beginn und zum Ende der Verstellbewegung im Zeitvelauf schwankt.

Ein erfindungsgemäßes Kraftfahrzeug umfasst ein schwenkbares Karosserieteils, insbesondere eine Klappe, wobei das Kraftfahrzeug einen Elektromotor mit einem Stator und einem Rotor umfasst, wobei der Elektromotor dazu eingerichtet ist, das schwenkbare Karosserieteil elektrisch zu bewegen. Der Elektromotor ist ein BLDC Motor mit einem dreiphasigen Stator, wobei ein Steuergerät des Kraftfahrzeugs dazu eingerichtet ist, ein Verfahren wie beschrieben auszuführen um eine manuelle externe Bewegung des schwenkbaren Karosserieteils durch einen Benutzer des Kraftfahrzeugs zu erkennen.

Vorzugsweise ist das Steuergerät dazu eingerichtet, nach dem Erkennen einer manuellen Bewegung des schwenkbaren Karosserieteils ein elektrisches Öffnen und/oder Schließen des schwenkbaren Karosserieteils zu initiieren.

### Kurzbeschreibung der Zeichnungen

Die Erfindung wird im Folgenden beispielhaft unter Bezugnahme auf die Zeichnungen beschrieben.
- Fig. 1: ist eine schematische Darstellung, insbesondere ein Ersatzschaltbild, eines Stators eines erfindungsgemäßen Kraftfahrzeugs.
- Fig. 2: zeigt schematisch eine Beispielmessung mit einem Oszilloskop an einem Stator eines erfindungsgemäßen Kraftfahrzeugs gemäß Fig. 1 - oben: PWM-Pulse an Phasen A und B; mitte: Sternpunktspannung an Phase C; unten: Strom durch L1 und L2.
- Fig. 3: zeigt schematisch die Änderung der Sternpunktspannung an Phase C, wenn der Rotor aus seiner Mittenposition mittels externer Krafteinwirkung in eine Richtung bewegt wird.
- Fig. 4: zeigt schematisch die Änderung der Sternpunktspannung an Phase C, wenn der Rotor aus seiner Mittenposition mittels externer Krafteinwirkung in die entgegengesetzte Richtung zur Richtung gemäß Fig. 3 bewegt wird.

### Detaillierte Beschreibung der Erfindung

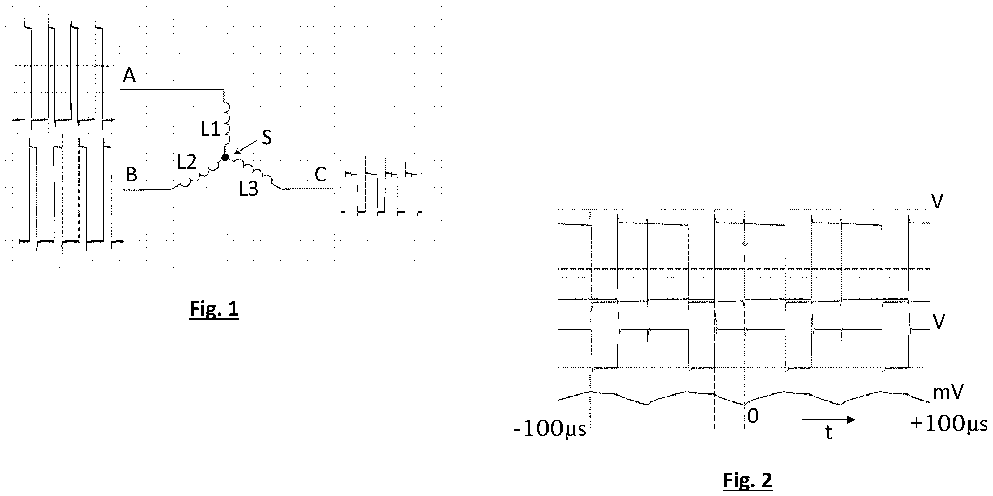

In der Fig. 1 ist ein Stator eines erfindungsgemäßen Kraftfahrzeugs und der dreiphasige Stator in einem erfindungsgemäßen Verfahren schematisch dargestellt.

An zwei Phasen (A, B) eines dreiphasen BLDC-Motors (Ersatzschaltbild Stator in Fig. 1) werden PWM-Pulse mit gleicher Pulshöhe appliziert. Die PWM-Pulse an A und B haben einen zeitlichen Versatz und sind nie gleichzeitig aktiv. Über die Pulsbreite (Differenz der Pulsbreite zwischen A und B) wird ein definierter Strom durch die Spulen L1 und L2 eingestellt, sodass der Rotor in Position gehalten wird. Ist die Pulsbreite von A breiter als von B, so fließt im Mittel ein Strom von A nach B. Die Spule L3 führt keinen Strom. An Phase C kann die Spannung des Sternpunktes S gemessen werden. Die Höhe der gemessenen Sternpunktspannung an C ist ohne eingesetzten Rotor die Hälfte der Pulshöhe an A und B - Prinzip eines Spannungsteilers. Die Induktivität und der ohmsche Widerstand von L1, L2 und L3 sind ident. Das Messprinzip eignet sich aber auch für L1 ungleich L2 und/oder L2 ungleich L3.

Wird der Rotor in den Stator eingesetzt so verändert sich auch die Induktivität von L1 und L2 (ebenso L3, dies ist jedoch nicht wesentlich für die Wirkung der Erfindung). Der Rotor kann nun so positioniert werden, dass weiterhin am Sternpunkt S die halbe Pulshöhe von A bzw. B gemessen wird. Diese Position nimmt der Rotor automatisch ein, wenn keine Last auf den Rotor wirkt und er sich frei bewegen kann. Der Rotor wird durch den Strom durch L1 und L2 und der daraus resultierenden magnetischen Kraft in diese Position bewegt. Fig. 2 zeigt eine Beispielmessung mit einem Oszilloskop dazu. Dabei zeigt der oben dargestellte Verlauf zweier Kurven die angelegten PWM-Pulse an Phasen A und B über der Zeit. Die Darstellung in der Mitte von Fig. 2 zeigt die am Messpunkt gemessene Sternpunktspannung an Phase C über demselben Zeitverlauf. Die Kurve unten in Fig. 2 zeigt den Strom durch die Spulen bzw. Induktivitäten L1 und L2.

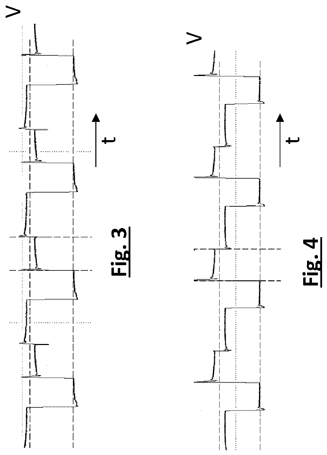

Wird der Rotor aus dessen Mittenposition mittels externer Krafteinwirkung in eine Richtung bewegt, so ändert sich die Sternpunktspannung wie in Fig. 3 dargestellt.

Wird der Rotor hingegen aus dessen Mittenposition mittels externer Krafteinwirkung in die andere, entgegengesetzte Richtung bewegt, so ändert sich die Sternpunktspannung wie in Fig. 4 dargestellt.

Durch kontinuierliche Überwachung und Auswertung der Sternpunktspannung, insbesondere zu Beginn und zum Ende der externen Verstellbewegung, kann somit erkannt werden, in welche Richtung eine Kraft auf den Rotor wirkt.

Wird die externe Kraft weiter erhöht, sodass der Rotor eine elektrische Umdrehung durchführt ("Sprung um ein Polpaar"), so ändert sich die Sternpunktspannung abrupt, entweder von einem Verlauf wie in Fig. 3 dargestellt auf einen Verlauf wie in Fig. 4, oder von einem Verlauf wie in Fig. 4 auf einen Verlauf wie in Fig. 3 dargestellt. Dies ist abhängig von der Drehrichtung des Rotors. Durch das kontinuierliche Messen und Auswerten dieser Veränderungen kann somit das Ausmaß der externen Verstellung "polpaargenau" gezählt werden. Weiters kann damit auch die Drehrichtung der externen Verstellung erkannt werden.

Auf die Erkennung einer Rotorbewegung und somit einer manuellen Bewegung des schwenkbaren Karosserieteils hin, kann dieses elektrisch bzw. elektrisch unterstützt weiter geöffnet bzw. geschlossenwerden (tip-torun).

### Bezugszeichenliste

- A: Stator, Phase A
- B: Stator, Phase B
- C: Stator, Phase C
- L1: Induktivität 1
- L2: Induktivität 2
- L3: Induktivität 3
- S: Sternpunkt

## Patentansprüche

1. Verfahren zum Erkennen einer Bewegung eines schwenkbaren Karosserieteils, insbesondere einer Klappe, eines Kraftfahrzeugs, wobei das Kraftfahrzeug einen Elektromotor mit einem Stator und einem Rotor umfasst, wobei der Elektromotor dazu eingerichtet ist, das schwenkbare Karosserieteil elektrisch zu bewegen,
**dadurch gekennzeichnet, dass** der Elektromotor ein BLDC Motor mit einem dreiphasigen Stator (A, B, C) ist, wobei zwei Phasen des Stators (A, B) mit einer pulsweitenmodulierten Spannung beaufschlagt werden, wobei die dritte Phase (C) freischwebend gehalten wird, wobei die dritte Phase (C) als Messpunkt für einen induktiven Spannungsteiler, der mit den zwei anderen Phasen (A, B) gebildet wird, überwacht wird, wobei wenn das Signal am Messpunkt oder eine von dem Signal abgeleitete Größe einen vorgegebenen Schwellwert überschreitet, eine Bewegung des schwenkbaren Karosserieteils erkannt ist.

2. Verfahren nach Anspruch 1,
**dadurch gekennzeichnet, dass** die zwei Phasen des Stators (A, B) zeitversetzt mit einer pulsweitenmodulierten Spannung beaufschlagt werden, so dass die beiden Phasen (A, B) nicht gleichzeitig aktiviert sind.

3. Verfahren nach zumindest einem der vorhergehenden Ansprüche, **dadurch gekennzeichnet, dass** die zwei Phasen des Stators (A, B) mit einer pulsweitenmodulierten Spannung gleicher Amplitude beaufschlagt werden.

4. Verfahren nach zumindest einem der vorhergehenden Ansprüche, **dadurch gekennzeichnet, dass** das am Messpunkt gemessene Signal kontinuierlich überwacht wird, wobei periodische Schwankungen des Signals am Messpunkt gezählt werden, um einen Winkel der Drehung des Rotors zu bestimmen.

5. Verfahren nach zumindest einem der vorhergehenden Ansprüche, **dadurch gekennzeichnet, dass** das am Messpunkt gemessene Signal kontinuierlich überwacht wird, wobei abhängig von einem Typ von Schwankungen des Signals am Messpunkt die Drehrichtung des Rotors bestimmt wird.

6. Kraftfahrzeug, umfassend ein schwenkbares Karosserieteils, insbesondere eine Klappe, wobei das Kraftfahrzeug einen Elektromotor mit einem Stator und einem Rotor umfasst, wobei der Elektromotor dazu eingerichtet ist, das schwenkbare Karosserieteil elektrisch zu bewegen,
**dadurch gekennzeichnet, dass** der Elektromotor ein BLDC Motor mit einem dreiphasigen Stator (A, B, C) ist, wobei ein Steuergerät des Kraftfahrzeugs dazu eingerichtet ist, ein Verfahren nach zumindest einem der vorhergehenden Ansprüche auszuführen um eine Bewegung des schwenkbaren Karosserieteils zu erkennen.

7. Kraftfahrzeug nach Anspruch 6,
**dadurch gekennzeichnet, dass** das Steuergerät dazu eingerichtet ist, nach dem Erkennen einer Bewegung des schwenkbaren Karosserieteils ein elektrisches Bewegen des schwenkbaren Karosserieteils zu initiieren, bevorzugt ein Schließen oder Öffnen je nach erkannter Drehrichtung zu initiieren. -.-.-.
